# EUROPÄISCHE PATENTSCHRIFT

(11) **EP 2 680 463 B1**
(45) Veröffentlichungstag und Bekanntmachung des Hinweises auf die Patenterteilung: **29.04.2015**
(21) Anmeldenummer: 13003192.5
(22) Anmeldetag: 21.06.2013
(51) Int. Cl.: H04B 10/071

(54) **Signalreflexionsvorrichtung für einen optischen Rückkopplungstest**
Signal reflection device for an optical feedback test
Dispositif de réflexion de signaux pour un test de rétroaction optique

(30) Priorität: 25.06.2012 DE 102012012410
(43) Veröffentlichungstag der Anmeldung: 01.01.2014
(73) Patentinhaber: Tesat-Spacecom GmbH & Co. KG, 71522 Backnang (DE)
(72) Erfinder: Weichert, Andreas, 71522 Backnang (DE)

(56) Entgegenhaltungen:
- US-A1- 2007 091 299
- US-A1- 2007 272 834
- US-A1- 2008 258 040

## Beschreibung

### Gebiet der Erfindung

Die vorliegende Erfindung betrifft Vorrichtungen für einen optischen Signalrückkopplungstest. Insbesondere betrifft die Erfindung eine Satellitentestsignalreflexionsvorrichtung zum Testen von optische Signale aussendenden Sendevorrichtungen, eine Sende- und Empfangsanordnung zur Übertragung von optischen Signalen sowie einen Satelliten.

### Technischer Hintergrund der Erfindung

Aktive, d. h. optische Strahlung aussendende, und passive, d. h. optische Strahlung empfangende, optische Geräte können zur optischen Signal- und Datenübertragung verwendet werden. In definierten festen oder variablen zeitlichen Abständen werden dabei insbesondere aktive optische Geräte üblicherweise einem Test, welcher die Signalübertragung überprüft, unterzogen. Dieser Test kann dabei durch eine geeignete optische Testumgebung vorgenommen werden. Insbesondere kann die Testumgebung den Anwendungsfall des optischen Gerätes simulieren.

Der Anwendungsfall eines Gerätes ist bei einem optischen Kommunikationssystem beispielsweise die Simulation der optischen Gegenstelle durch ein geeignetes Testsystem. Im Rahmen eines solchen Tests bzw. einer solchen Testsequenz können Vorrichtungen zur Anwendung kommen, welche spezielle Testsignale erzeugen und damit an dem zu testenden Gerät geeignete Messungen vornehmen. Zunehmende Komplexität optischer Geräte kann beispielsweise die Notwendigkeit solcher Tests und die Anforderungen an die Testsysteme erhöhen.

Um den Aufwand für solche Tests zu reduzieren, können interne Testvorrichtungen an optischen Geräten angeordnet werden, so dass das Gerät in die Lage versetzt wird, eine Testsequenz selbstständig durchzuführen.

Eine Signalreflektionseinrichtung zum Testen optischer Signale nach dem Stand der Technik ist aus der US-A-20080258040 bekannt.

### Zusammenfassung der Erfindung

Es kann als eine Aufgabe der Erfindung angesehen werden, eine Satellitentestsignalreflexionsvorrichtung anzugeben, welche eine hohe Leistungsabschwächung des optischen Testsignals ermöglicht und dabei eine mit dieser Abschwächung typischerweise einhergehende thermische Verlustleistung bzw. Einspeisung von thermischer Energie in die Satellitentestsignalreflexionsvorrichtung zu reduzieren.

Es sind eine Satellitentestsignalreflexionsvorrichtung, eine Sende- und Empfangsanordnung und ein Satellit gemäß den Merkmalen der unabhängigen Patentansprüche angegeben. Weiterbildungen der Erfindung ergeben sich aus den abhängigen Ansprüchen und aus der folgenden Beschreibung.

Gemäß einem ersten Aspekt der Erfindung ist eine Satellitentestsignalreflexionsvorrichtung zum Testen von optische Signale aussendenden Sendevorrichtungen angegeben, wobei die Satellitentestsignalreflexionsvorrichtung eine Platte aufweist, welche für optische Signale zumindest teilweise durchlässig ausgeführt ist. Die Platte weist dabei einen Grundkörper, eine erste Oberfläche und eine zweite Oberfläche auf, wobei die erste Oberfläche eine restreflektierende Beschichtung. Die restreflektierende Beschichtung ist ausgeführt, einen optischen Strahl, welcher die Platte in einer ersten Richtung von der ersten Oberfläche zu der zweiten Oberfläche durchdringt, in einen reflektierten optischen Strahl und einen transmittierten optischen Strahl aufzuteilen, wobei die Platte ausgeführt ist, den transmittierten optischen Strahl bei einem Austritt aus dem Grundkörper zu streuen.

Die Satellitentestsignalreflexionsvorrichtung kann insbesondere ausgeführt sein zur Verwendung in einem Vakuum bzw. im Weltall.

Bei der Platte kann es sich beispielsweise um eine Glasplatte oder um eine sonstige für optische Signale bzw. Licht zumindest teilweise durchlässige Platte handeln. Die Platte ist ausgeführt, von der optischen Leistung eines eintreffenden optischen Signals lediglich einen Anteil durchzulassen bzw. zu transmittieren, wobei ein anderer Teil der optischen Leistung eines eintreffenden optischen Signals beispielsweise reflektiert werden kann.

Die erste Oberfläche und die zweite Oberfläche können so an dem Grundkörper der Platte angeordnet sein, dass die erste Oberfläche der zweiten Oberfläche gegenüberliegt. Die restreflektierende Beschichtung, welche an der ersten Oberfläche angeordnet ist, ist ausgeführt, einen Teil der optischen Leistung eines optischen Signals zu reflektieren, welches auf die restreflektierende Beschichtung auftrifft. Der nicht reflektierte Anteil der optischen Leistung des optischen Signals wird durch die restreflektierende Beschichtung und durch den Grundkörper der Platte durchgelassen.

Damit eignet sich die Satellitentestsignalreflexionsvorrichtung zum Testen von Sendevorrichtungen auf engem Raum, beispielsweise von Sendevorrichtungen auf Satelliten, welche üblicherweise zur Datenübermittlung und zur Datenkommunikation mit einer Gegenstelle auf der Erdoberfläche vorgesehen sind.

Durch die restreflektierende Beschichtung der ersten Oberfläche der Platte ist sichergestellt, dass das von der aussendenden Sendevorrichtung ausgestrahlte optische Signal mit einer reduzierten optischen Leistung bei einer Empfangsvorrichtung ankommt, wobei die Sendevorrichtung, die Empfangsvorrichtung und die Satellitentestsignalreflexionsvorrichtung in einem geringen Abstand von einigen wenigen Metern, beispielsweise weniger als 10 oder 20 Meter oder in der Größenordnung von einigen Zentimetern wie beispielsweise weniger als 50 cm oder insbesondere 10 cm, an Bord eines Satelliten angeordnet sein können. Eine Totalreflexion bzw. Beinahe-Totalreflexion des von der Sendevorrichtung ausgestrahlten optischen Signals zu der Empfangsvorrichtung könnte die Empfangsvorrichtung beschädigen bzw. zerstören, da die Empfangsvorrichtung durch die große Entfernung eines Satelliten zu der Erdoberfläche für den Empfang von optischen Signalen mit wesentlich geringerer optischer Leistung ausgelegt ist, als die Leistung, mit der die optischen Signale von der Sendevorrichtung ausgestrahlt werden.

Die lichtstreuend ausgeführte zweite Oberfläche der Platte sorgt dafür, dass das von der Platte durchgelassene Licht bzw. optische Signal gestreut wird. Das bedeutet, dass der Einfallswinkel des transmittierten optischen Strahls nicht dem Ausfallswinkel mit Bezug zu der zweiten Oberfläche entspricht, sondern dass das Licht in einen kompletten Halbraum auf einer der beiden Seiten der zweiten Oberfläche verteilt bzw. gestreut wird. Bei dem Halbraum handelt es sich um einen Raum auf einer Seite der Ebene, welche durch die Platte aufgespannt wird. Somit teilt diese Ebene den kompletten Raum in zwei Halbräume. Die zweite Oberfläche kann einen Teil des Lichts bzw. der optischen Strahlen streuen und einen anderen Teil transmittieren.

Durch diese Streuung des transmittierten optischen Strahls durch die lichtstreuend ausgeführte zweite Oberfläche kann gewährleistet werden, dass von der optischen Leistung des von der Sendevorrichtung ausgestrahlten optischen Signals bei der Empfangsvorrichtung ein sehr stark gedämpftes reflektiertes optisches Signal ankommt. Von dem transmittierten optischen Strahl, welcher von der zweiten Oberfläche gestreut wird, kann bei der Empfangsvorrichtung ein Signal ankommen, welches mit Bezug zu dem von der Sendevorrichtung ausgestrahlten optischen Signal beispielsweise um 90 dB oder mehr gedämpft ist.

Das von der restreflektierenden Beschichtung auf der ersten Oberfläche reflektierte optische Signal kann mit Bezug zu der optischen Leistung des von der Sendevorrichtung ausgesandten optischen Signals beispielsweise um 30 dB gedämpft sein. Durch den großen Unterschied im Dämpfungspegel des transmittierten optischen Strahls sowie auch des Fremd- bzw. Störlichtes und des Dämpfungspegels des reflektierten optischen Strahls, bei den beispielhaft genannten Dämpfungspegeln sind dies 60 dB, ist ein ausreichender Signal-Rausch-Abstand gegeben, so dass der reflektierte optische Strahl, d.h. das Nutzsignal, von dem gestreuten Licht, d.h. dem Rauschsignal, unterschieden werden kann.

Fremd- bzw. Störlicht, beispielsweise von der Sonne oder sonstigen Lichtquellen, welches auf die Platte trifft, wird ebenfalls von der zweiten Oberfläche gestreut, so dass dies lediglich zu einem geringen Wärmeeintrag in die Satellitentestsignalreflexionsvorrichtung führt.

Bei den optischen Strahlen kann es sich im Allgemeinen um elektromagnetische Wellen im sichtbaren Bereich, im infraroten Bereich oder im ultravioletten Bereich handeln.

Gemäß einer Ausführungsform der Erfindung ist die zweite Oberfläche der Platte optisch streuend ausgeführt.

Dies ermöglicht, dass die durch die Platte transmittierte optische Strahlung von der zweiten Oberfläche gestreut wird. Damit sorgt die zweite Oberfläche insbesondere bei einem hochenergetischen gebündelten optischen Signal, wie beispielsweise bei einem Laserstrahl, für eine flächige Verteilung der optischen Leistung dieses Signals. Die lichtstreuend ausgeführte zweite Oberfläche kann beispielsweise auch ausgeführt sein, einen Anteil der optischen Leistung des transmittierten optischen Strahls zurück zu der ersten Oberfläche zu streuen, wobei diese von der zweiten Oberfläche gestreute transmittierte optische Strahlung in einen kompletten Halbraum gestreut wird, wobei der Halbraum sich bezogen auf die erste Oberfläche auf der dem Grundkörper und der zweiten Oberfläche der Platte gegenüber liegenden Seite befindet.

Gemäß einer Ausführungsform der Erfindung ist der Grundkörper der Platte optisch streuend ausgeführt.

Dies bedeutet, dass der Grundkörper einen gebündelten optischen Strahl, wie z. B. einen Laserstrahl, optisch so streut, dass die Strahlung bzw. das Licht durch den Grundkörper der Platte flächig gestreut wird.

Dadurch kann insbesondere ein Eintrag von thermischer Energie durch einen Laserstrahl reduziert werden, da der transmittierte optische Strahl durch den Grundkörper in einen kompletten Halbraum vor oder hinter der Platte bezogen auf eine Durchlassrichtung des optischen Signals gestreut wird.

Daneben verhindert die optisch streuend ausgeführte Platte bzw. der optisch streuend ausgeführte Grundkörper der Platte, dass die gesamte optische Leistung des optischen Signals von der aussendenden Sendevorrichtung in die gleiche Richtung reflektiert wird.

Gemäß einer weiteren Ausführungsform der Erfindung weist die Platte eine optisch streuende Beschichtung auf.

Der optisch streuenden Beschichtung kommt dabei grundsätzlich die gleiche Aufgabe und Funktion zu wie dem optisch streuend ausgeführten Grundkörper. Die optisch streuende Beschichtung kann dabei alternativ oder zusätzlich zu dem optisch streuend ausgeführten Grundkörper der Platte Verwendung finden.

Gemäß einer Ausführungsform ist die optisch streuende Beschichtung zwischen der restreflektierenden Beschichtung und dem Grundkörper angeordnet.

Insbesondere kann die optisch streuende Beschichtung unmittelbar zwischen der restreflektierenden Beschichtung und dem Grundkörper angeordnet sein, was bedeutet, dass die optisch streuende Beschichtung jeweils in direktem Haftkontakt zu der restreflektierenden Beschichtung und dem Grundkörper steht.

Gemäß einer weiteren Ausführungsform ist die restreflektierende Beschichtung ausgeführt, weniger als 10 Promille, insbesondere weniger als 5 Promille, insbesondere weniger als 2 Promille, insbesondere 1 +/- 0,5 Promille einer optischen Leistung des optischen Strahls zu reflektieren.

Typischerweise ist die Empfangsvorrichtung ausgeführt, Signale von wesentlich geringerer optischer Leistung zu detektieren bzw. zu empfangen, als die optische Leistung der Signale, welche von der Sendevorrichtung ausgesandt werden. Ist die Satellitentestsignalreflexionsvorrichtung im Abstand von wenigen Metern zu der Sendevorrichtung bzw. der Empfangsvorrichtung angeordnet, so entsteht durch diesen geringen Abstand, beispielsweise von wenigen Metern bis hin zu einigen Zentimetern, keine entsprechende Abschwächung der optischen Leistung des optischen Strahls, da eine große Entfernung zwischen Sende- und Empfangsvorrichtung eben nicht gegeben ist. Damit hat die Abschwächung der optischen Leistung des optischen Strahls durch die restreflektierende Beschichtung zu erfolgen.

Damit kann die Satellitentestsignalreflexionsvorrichtung in bestehenden Sende-/Empfangsvorrichtungen zum Einsatz kommen, ohne dass beispielsweise der Bereich der von der Empfangsvorrichtung empfangbaren optischen Leistung verändert werden muss.

Somit kann zum einen das Nachrüsten bzw. Modifizieren bestehender Komponenten vermieden werden, es kann aber auch die Verwendung von zusätzlichen Komponenten in der Empfangsvorrichtung vermieden werden, was insbesondere im Bereich der Luft- und Raumfahrt von großer Bedeutung ist, da jedes nicht verwendete bzw. eingesparte Bauteil bei Luft- und Raumfahrzeugen einen Gewichtsvorteil mit sich bringen kann.

Beispielsweise weist die restreflektierende Beschichtung einen Reflexionsgrad von einem Promille oder bis zu einem Promille der ursprünglichen optischen Leistung eines von der Sendevorrichtung ausgesandten und auf der Platte eintreffenden optischen Strahls auf, so dass die optische Leistung des zu der Empfangsvorrichtung reflektierten optischen Strahls einem Promille der optischen Leistung der Sendevorrichtung entspricht. Diese Reduktion kann zusammen mit einer möglichen Reduktion der Sendeleistung ausreichen, um zum einen das optische System der Empfangsvorrichtung durch zu hohe optische Leistung nicht zu beschädigen und zum zweiten innerhalb eines Empfangsdynamikbereiches, d.h. eines Leistungsbereiches, in welchem sich die optische Leistung eines empfangenen optischen Signals befinden darf, der Empfangsvorrichtung zu sein. In dem Falle, dass die Sendeleistung der Sendevorrichtung angepasst, insbesondere reduziert, werden kann, ist auch die Verwendung von restreflektierenden Beschichtungen mit einem Reflexionsgrad von mehr als einem Promille möglich. Beispielsweise kann für den Fall, dass die Sendeleistung halbiert werden kann, der Reflexionsgrad 2 Promille betragen. In dem Fall, dass die optische Leistung der Sendevorrichtung auf 20 % reduziert werden kann, kann der Reflexionsgrad der restreflektierenden Beschichtung auch 5 Promille betragen. Letztlich kann der Reflexionsgrad 10 Promille betragen, wenn die optische Leistung der Sendevorrichtung auf ein Zehntel der ursprünglichen Leistung reduziert werden kann.

Selbstverständlich sind auch Zwischenstufen der Reflexionsgrade der restreflektierenden Beschichtung möglich. Insbesondere ist für sämtliche Reflexionsgrade eine Toleranz wie z. B. +/- 0,5 Promille denkbar und möglich.

Sowohl die Erhöhung der Reflexionsgrade, d. h. eine Veränderung des Reflexionsgrades von beispielsweise einem Promille auf 10 Promille, als auch die Zulassung von Toleranzbereichen hinsichtlich des Reflexionsgrades können den Aufwand und die Kosten für die Herstellung der Platte und insbesondere der restreflektierenden Beschichtung reduzieren.

Gemäß einer weiteren Ausführungsform der Erfindung weist die Satellitentestsignalreflexionsvorrichtung eine Abschirmung mit einer Innenfläche auf, wobei die Abschirmung so angeordnet ist, dass die Innenfläche gegenüberliegend zu der zweiten Oberfläche der Platte angeordnet ist, wobei die Innenfläche zumindest in einem Teilbereich reflektierend ausgeführt ist, so dass der die Platte verlassende gestreute optische Strahl zurück zu der Platte reflektiert wird.

Die Abschirmung kann dabei ausgeführt sein, sowohl die Platte in einer Position zu fixieren als auch die Satellitentestsignalreflexionsvorrichtung beispielsweise mit einem Satelliten oder einem sonstigen Luft- oder Raumfahrzeug mechanisch zu koppeln.

Die Innenfläche der Abschirmung nimmt den transmittierten optischen Strahl auf, welcher die Platte an der zweiten Oberfläche verlässt.

Ein Teilbereich der Innenfläche, d. h. ein Teil der Fläche der Innenfläche oder die gesamte Fläche der Innenfläche, kann reflektierend ausgeführt sein, so dass das transmittierte Licht bzw. der transmittierte optische Strahl, welcher die zweite Oberfläche verlässt, zu der zweiten Oberfläche zurückreflektiert wird. Beim Auftreffen des von der Innenfläche reflektierten optischen Strahls erfolgt durch die zweite Oberfläche der Platte erneut eine optische Streuung dieser Strahlen, so dass diese optischen Strahlen in den Halbraum ausgehend von der zweiten Oberfläche in Richtung der ersten Oberfläche der Platte gestreut werden.

Dadurch, dass die Innenfläche die auf sie eintreffenden optischen Strahlen reflektiert und gerade nicht absorbiert, wird ein Eintrag von thermischer Energie in die Satellitentestsignalreflexionsvorrichtung und insbesondere in die Abschirmung reduziert oder sogar vermieden. Dies gilt sowohl für den optischen Strahl der Sendevorrichtung als auch für Fremd- bzw. Störlicht wie z.B. Sonnenlicht.

Indem der Eintrag von thermischer Energie in die Satellitentestsignalreflexionsvorrichtung reduziert wird, kann ein gleichbleibendes reflektiertes Signal ohne hohe Qualitätsverluste der optischen Übertragungsgüte gewährleistet werden. Weiterhin kann die Satellitentestsignalreflexionsvorrichtung in diesem Fall auf eine Kühlung verzichten, welche sich bei durch absorbierte optische Strahlung verursachte Eintragung von thermischer Energie als notwendig erweisen könnte.

Gemäß einer Ausführungsform der Erfindung ist die Innenfläche der Abschirmung zumindest in einem Teilbereich optisch streuend ausgeführt.

Dies bedeutet, dass auf die Innenfläche auftreffendes Licht bzw. optische Strahlung bei der Reflexion dieser optischen Strahlung gestreut wird.

Der optisch streuende Bereich kann sich dabei über die gesamte Fläche der Innenfläche der Abschirmung oder über einen Teil der Fläche der Innenfläche der Abschirmung erstrecken. Dabei kann der optisch streuend ausgeführte Teilbereich der Innenfläche gleich groß wie oder größer oder kleiner als der reflektierend ausgeführte Teilbereich der Innenfläche ausgeführt sein.

Gemäß einem weiteren Aspekt der Erfindung ist eine Sende- und Empfangsanordnung zur Übertragung von optischen Signalen angegeben. Dabei weist die Sende- und Empfangsanordnung eine Sendeeinheit, eine Empfangseinheit, eine Satellitentestsignalreflexionsvorrichtung wie oben und im Folgenden beschrieben und eine mechanische Kopplung auf, welche ausgeführt ist, die Sendeeinheit, die Empfangseinheit und die Satellitentestsignalreflexionsvorrichtung mechanisch miteinander zu koppeln. Dabei ist die mechanische Kopplung ausgeführt, die Satellitentestsignalreflexionsvorrichtung in Bezug zu der Sendeeinheit und zu der Empfangseinheit in einer Testposition so zu positionieren, dass ein von der Sendeeinheit ausgesandtes optisches Signal von der restreflektierenden Beschichtung in Richtung der Empfangseinheit reflektiert wird.

Bei der mechanischen Kopplung kann es sich beispielsweise um einen Haltearm handeln, welcher an einem Satelliten angeordnet ist. Die Sendeeinheit und die Empfangseinheit können jeweils so ausgeführt sein, dass sie in einer Betriebsposition optische Signale mit einer Gegenstelle auf der Erdoberfläche austauschen und in einer Testposition der Satellitentestsignalreflexionsvorrichtung zugewandt sind, so dass die Sende- und Empfangsanordnung eine Testsequenz der Sendeeinheit und der Empfangseinheit durchführen kann.

Gemäß einer Ausführungsform ist die Sendeeinheit ausgeführt, ein optisches Testsignal in der Testposition der Satellitentestsignalreflexionsvorrichtung auszusenden, wobei die Empfangseinheit ausgeführt ist, ein von der Platte reflektiertes Testsignal zu empfangen, wobei die Sende- und Empfangsanordnung ausgeführt ist, eine Signalübertragungsgüte anhand des ausgesendeten und empfangenen Testsignals zu ermitteln.

Gemäß einem weiteren Aspekt der Erfindung ist ein Satellit angegeben, der eine Sendeeinheit zum Senden von optischen Signalen, eine Empfangseinheit zum Empfangen von optischen Signalen und eine Satellitentestsignalreflexionsvorrichtung wie oben und im Folgenden beschrieben aufweist. Dabei ist die Satellitentestsignalreflexionsvorrichtung ausgeführt, in einer Testposition ein von der Sendeeinheit ausgesandtes optisches Testsignal in Richtung der Empfangseinheit zu reflektieren, so dass die Empfangseinheit das reflektierte optische Testsignal empfängt, wobei der Satellit ausgeführt ist, mittels dem ausgesandten optischen Testsignal und dem reflektierten optischen Testsignal eine Signalübertragungsgüte der Sendeeinheit und der Empfangseinheit zu ermitteln.

Neben der Signalübertragungsgüte kann auch ermittelt werden, ob die Sendeeinheit und die Empfangseinheit bestimmte Funktionsparameter erfüllen. Die Testposition kann insbesondere eingenommen werden, indem die Sendeeinheit und die Empfangseinheit so positioniert werden, dass diese jeweils der Satellitentestsignalreflexionsvorrichtung zugewandt sind.

### Kurze Beschreibung der Figuren

Nachfolgend wird anhand der beigefügten Zeichnungen näher auf Ausführungsbeispiele der Erfindung eingegangen. Es zeigen:
- **Fig. 1**: eine Satellitentestsignalreflexionsvorrichtung gemäß einem Ausführungsbeispiel der Erfindung.
- **Fig. 2**: eine Sende- und Empfangsanordnung gemäß einem weiteren Ausführungsbeispiel der Erfindung.
- **Fig. 3**: eine Satellitentestsignalreflexionsvorrichtung gemäß einem weiteren Ausführungsbeispiel der Erfindung.
- **Fig. 4**: eine Satellitentestsignalreflexionsvorrichtung gemäß einem weiteren Ausführungsbeispiel der Erfindung.
- **Fig. 5**: eine schematische Ansicht eines Satelliten gemäß einem weiteren Ausführungsbeispiel der Erfindung.

### Detaillierte Beschreibung von Ausführungsbeispielen

Die in den Figuren gezeigten Darstellungen sind schematisch und nicht maßstabsgetreu.

Werden in der folgenden Figurenbeschreibung gleiche Bezugszeichen verwendet, so betreffen diese gleiche oder ähnliche Elemente.

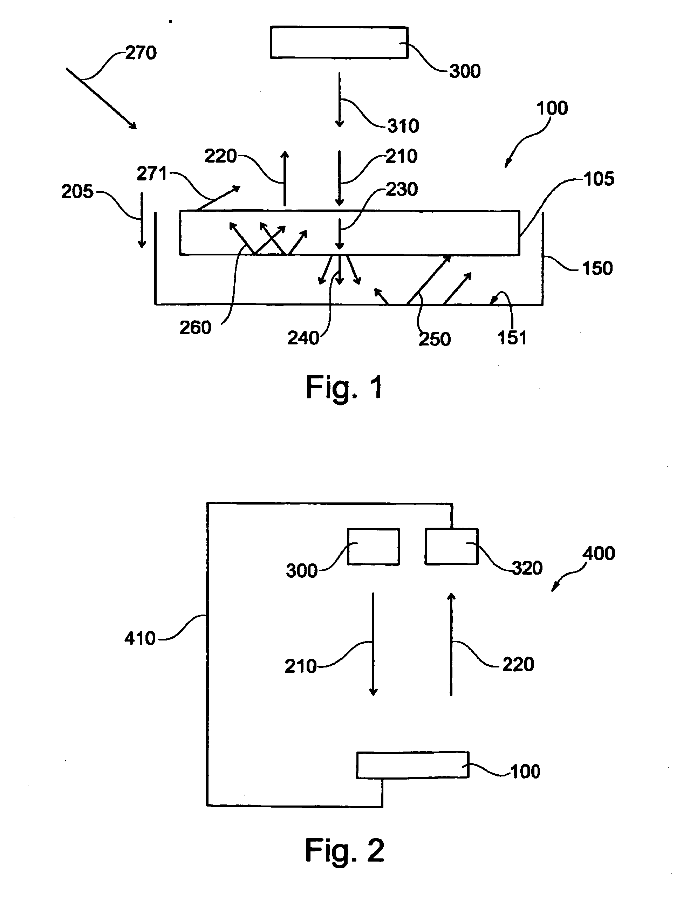

Fig. 1 zeigt eine Satellitentestsignalreflexionsvorrichtung 100, wobei zu Darstellungszwecken eine Sendevorrichtung 300 und die entsprechenden optischen Strahlen dargestellt sind, welche im Weiteren detailliert beschrieben werden.

Die Satellitentestsignalreflexionsvorrichtung 100 weist eine Platte 105 und eine Abschirmung 150 auf. Optische Signale 310, welche von der Sendevorrichtung 300 in Richtung der Satellitentestsignalreflexionsvorrichtung 100 ausgestrahlt werden, treffen zunächst als optischer Strahl 210 auf der Platte 105 auf. Dabei wird der optische Strahl 210 in einen reflektierten optischen Strahl 220 und einen transmittierten optischen Strahl 230 aufgeteilt, wobei der reflektierte optische Strahl 220 in Richtung einer (nicht dargestellten) Empfangsvorrichtung reflektiert wird und wobei der transmittierte optische Strahl 230 von der Platte 105 transmittiert wird und die Platte auf der der Sendevorrichtung 300 abgewandten Oberfläche als gestreuter optischer Strahl 240 verlässt. Ein Teil der optischen Leistung des transmittierten optischen Strahls 230 kann beim Auftreffen auf die zweite Oberfläche zurück in Richtung der ersten Oberfläche gestreut werden und bildet dabei die von der zweiten Oberfläche gestreute optische Strahlung 260, welche den Grundkörper bzw. die erste Oberfläche in den Halbraum in Richtung der Sendevorrichtung verlassen kann, wobei aber hiervon durch die Streuung nur ein geringer Anteil beispielsweise bei der Empfangsvorrichtung ankommt.

Weiterhin zeigt Figur 1 eine Fremd- bzw. Störstrahlung 270, von welcher ein Teil von der ersten Oberfläche als reflektierte Fremdstrahlung 271 reflektiert wird. Derjenige Anteil der Fremdstrahlung 270, welcher durch die erste Oberfläche und/oder den Grundkörper der Platte transmittiert wird, kann ebenfalls von der zweiten Oberfläche gestreut werden.

Die optischen Strahlen 220, 271 sind damit von der ersten Oberfläche oder einer auf der ersten Oberfläche befindlichen restreflektierenden Beschichtung reflektierte optische Strahlen, die optischen Strahlen 240, 250, 260 bezeichnen gestreute optische Strahlen, insbesondere diffus gestreute optische Strahlen und bei dem optischen Strahl 230 handelt es sich um einen transmittierten optischen Strahl.

Der gestreute optische Strahl 240 wird von der Innenfläche 151 der Abschirmung 150 reflektiert und so erneut zu der Platte 105 ausgesandt. Die Innenfläche 151 kann die gestreuten optischen Strahlen 240 ebenfalls optisch streuen, so dass die von der Innenfläche 151 reflektierten und gestreuten optischen Strahlen 250 zu der Platte 105 reflektiert werden, diese transmittieren und in den gesamten Halbraum zwischen der Platte 105 und der Sendevorrichtung 300 verteilt ausgestrahlt werden.

Der optische Strahl 210 wird von der Sendevorrichtung 300 in einer Richtung 205 auf die Satellitentestsignalreflexionsvorrichtung 100 gestrahlt, wobei der reflektierte optische Strahl 220 genau entgegengesetzt der Richtung 205 verläuft, so dass dieser reflektierte optische Strahl 220 bei einer empfangenden Empfangsvorrichtung detektiert werden kann. Im Gegensatz dazu werden die von der Innenfläche 151 der Abschirmung 150 reflektierten optischen Strahlen 250 nicht zielgerichtet und der Richtung 205 entgegen gerichtet bzw. antiparallel ausgestrahlt, so dass von der Platte 105 im Wesentlichen das reflektierte optische Signal bzw. der reflektierte optische Strahl 220 gezielt in seiner Richtung hin zu der Empfangsvorrichtung reflektiert wird.

Wie der Fig. 1 deutlich zu entnehmen ist, werden die gestreuten optischen Strahlen 240 ebenfalls optisch gestreut von der Innenfläche 151 der Abschirmung 150 reflektiert, so dass durch diese optischen Strahlen ein lediglich geringer oder gar kein Eintrag von thermischer Energie in die Satellitentestsignalreflexionsvorrichtung 100 erfolgt.

Fig. 2 zeigt eine Sende- und Empfangsanordnung 400, welche eine Sendeeinheit 300, eine Empfangseinheit 320 und eine Satellitentestsignalreflexionsvorrichtung 100 aufweist.

Sendeeinheit, Empfangseinheit und Satellitentestsignalreflexionsvorrichtung sind mit einem Haltearm bzw. einer mechanische Kopplung mechanisch gekoppelt. Die Sendeeinheit 300 sendet einen optischen Strahl 210 in Richtung der Satellitentestsignalreflexionsvorrichtung aus, welche den reflektierten optischen Strahl 220 zu der Empfangseinheit 320 reflektiert.

Bei der mechanischen Kopplung kann es sich beispielsweise auch um ein Gehäuse eines Satelliten handeln, an welchem sowohl Sendeeinheit/Empfangseinheit als auch die Satellitentestsignalreflexionsvorrichtung angeordnet sind.

Es sei darauf hingewiesen, dass sich zwischen Sendeeinheit bzw. Empfangseinheit und der Satellitentestsignalreflexionsvorrichtung beispielsweise Spiegel oder andere optische Komponenten wie Linsen befinden können, wobei der optische Strahl 210 und der reflektierte optische Strahl 220 von den Spiegeln gelenkt oder abgelenkt werden können, um so beispielsweise zu der Empfangseinheit gelenkt zu werden, welche örtlich versetzt zu der Sendeeinheit angeordnet sein kann.

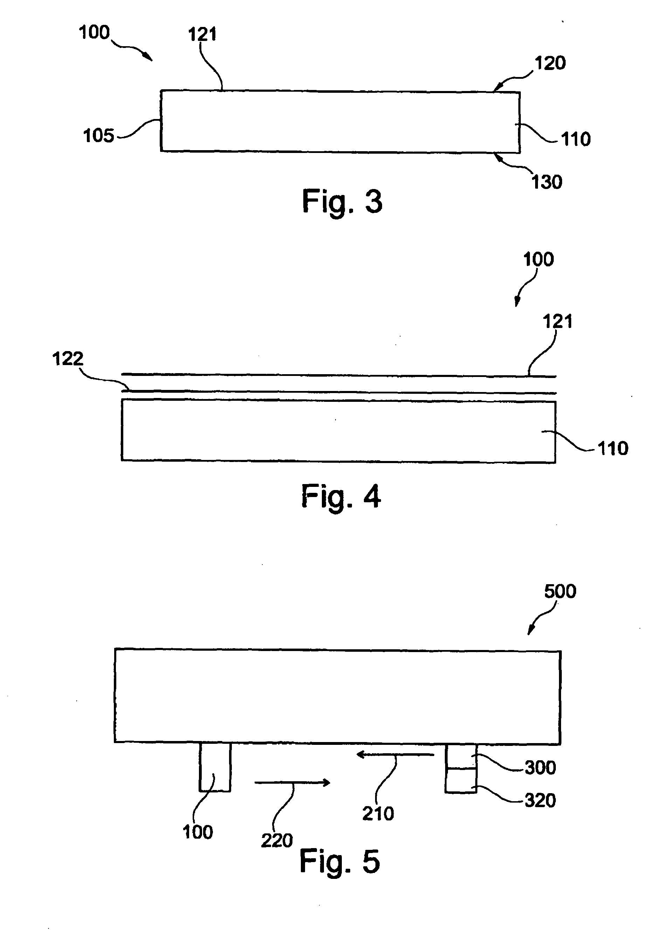

Fig. 3 zeigt eine Satellitentestsignalreflexionsvorrichtung 100, welche eine Platte 105 mit einem Grundkörper 110, einer ersten Oberfläche 120 und einer zweiten Oberfläche 130 aufweist. Die erste Oberfläche 120 weist eine restreflektierende Beschichtung 121 auf.

Die restreflektierende Beschichtung 121 ist dabei ausgeführt, ein auf die erste Oberfläche 120 auftreffendes optisches Signal bzw. einen auf die erste Oberfläche 120 auftreffenden optischen Strahl so zu reflektieren bzw. zu transmittieren, dass die optische Leistung des reflektierten optischen Strahls lediglich einem Bruchteil der optischen Leistung des auf die erste Oberfläche 120 treffenden optischen Strahls entspricht.

Fig. 4 zeigt eine Satellitentestsignalreflexionsvorrichtung 100 mit einem Grundkörper 110, einer restreflektierenden Beschichtung 121 und einer optisch streuenden Beschichtung 122.

Die optische streuende Beschichtung 122 ist dabei zwischen dem Grundkörper 110 und der restreflektierenden Beschichtung 121 angeordnet.

Damit folgt durch die optisch streuend ausgeführte Beschichtung 122 eine Streuung derjenigen optischen Strahlen, die von der restreflektierenden Beschichtung 121 durchgelassen wurden, wobei die von der optisch streuenden Beschichtung 122 gestreuten optischen Strahlen den Grundkörper 110 der Satellitentestsignalreflexionsvorrichtung 100 passieren.

Fig. 5 zeigt einen Satelliten 500, wobei an dem Satelliten eine Sendeeinheit 300, eine Empfangseinheit 320 und eine Satellitentestsignalreflexionsvorrichtung 100 angeordnet sind.

Die Sendeeinheit 300 beaufschlagt die Satellitentestsignalreflexionsvorrichtung 100, welche peripher an oder integriert in dem Satelliten angeordnet sein kann, mit einem optischen Strahl 210, wobei die Satellitentestsignalreflexionsvorrichtung 100 einen reflektierten optischen Strahl 220 mit einer im Vergleich zu dem optischen Strahl 210 reduzierten optischen Leistung zu der Empfangseinheit 320 reflektiert.

## Patentansprüche

1. Satellitentestsignalreflexionsvorrichtung (100) zum Testen von optische Signale (310) aussendenden Sendevorrichtungen (300), die Satellitentestsignalreflexionsvorrichtung aufweisend:
eine Platte (105), welche für optische Signale zumindest teilweise durchlässig ausgeführt ist;
wobei die Platte einen Grundkörper (110), eine erste Oberfläche (120) und eine zweite Oberfläche (130) aufweist;
wobei die erste Oberfläche (120) eine restreflektierende Beschichtung (121) aufweist;
wobei die restreflektierende Beschichtung ausgeführt ist, einen optischen Strahl (210), welcher die Platte in einer ersten Richtung (205) von der ersten Oberfläche zu der zweiten Oberfläche durchdringt, in einen reflektierten optischen Strahl (220) und einen transmittierten optischen Strahl (230) aufzuteilen;
wobei die Platte ausgeführt ist, den transmittierten optischen Strahl bei einem Austritt aus dem Grundkörper zu streuen.

2. Satellitentestsignalreflexionsvorrichtung nach Anspruch 1,
wobei die zweite Oberfläche (130) lichtstreuend ausgeführt ist.

3. Satellitentestsignalreflexionsvorrichtung nach einem der vorhergehenden Ansprüche,
wobei der Grundkörper der Platte optisch streuend ausgeführt ist.

4. Satellitentestsignalreflexionsvorrichtung nach einem der vorhergehenden Ansprüche,
wobei die Platte eine optisch streuende Beschichtung (122) aufweist.

5. Satellitentestsignalreflexionsvorrichtung nach Anspruch 4,
wobei die optisch streuende Beschichtung zwischen der restreflektierenden Beschichtung und dem Grundkörper angeordnet ist.

6. Satellitentestsignalreflexionsvorrichtung nach einem der vorhergehenden Ansprüche,
wobei die restreflektierende Beschichtung ausgeführt ist, weniger als 10 Promille, insbesondere weniger als 5 Promille, insbesondere weniger als 2 Promille, insbesondere 1 +/- 0,5 Promille einer optischen Leistung des optischen Strahls zu reflektieren.

7. Satellitentestsignalreflexionsvorrichtung nach einem der vorhergehenden Ansprüche, weiterhin aufweisend:
eine Abschirmung (150) mit einer Innenfläche (151),
wobei die Abschirmung so angeordnet ist, dass die Innenfläche gegenüberliegend zu der zweiten Oberfläche der Platte angeordnet ist;
wobei die Innenfläche zumindest in einem Teilbereich reflektierend ausgeführt ist, so dass der die Platte verlassende gestreute optische Strahl zurück zu der Platte reflektiert wird.

8. Satellitentestsignalreflexionsvorrichtung nach Anspruch 7,
wobei die Innenfläche der Abschirmung zumindest in einem Teilbereich optisch streuend ausgeführt ist.

9. Sende- und Empfangsanordnung (400) zur Übertragung von optischen Signalen, die Sende- und Empfangsanordnung aufweisend:
eine Sendeeinheit (300);
eine Empfangseinheit (320);
eine Satellitentestsignalreflexionsvorrichtung nach einem der Ansprüche 1 bis 8; und
eine mechanische Kopplung (410), welche ausgeführt ist, die Sendeeinheit, die Empfangseinheit und die Satellitentestsignalreflexionsvorrichtung mechanisch miteinander zu koppeln;
wobei die mechanische Kopplung ausgeführt ist, die Satellitentestsignalreflexionsvorrichtung in Bezug zu der Sendeeinheit und zu der Empfangseinheit in einer Testposition so zu positionieren, dass ein von der Sendeeinheit ausgesandtes optisches Signal von der restreflektierenden Beschichtung in Richtung der Empfangseinheit reflektiert wird.

10. Sende- und Empfangsanordnung nach Anspruch 9,
wobei die Sendeeinheit ausgeführt ist, ein optisches Testsignal in der Testposition der Satellitentestsignalreflexionsvorrichtung auszusenden;
wobei die Empfangseinheit ausgeführt ist, ein von der Platte reflektiertes Testsignal zu empfangen;
wobei die Sende- und Empfangsanordnung ausgeführt ist, eine Signalübertragungsgüte anhand des ausgesendeten und empfangenen Testsignals zu ermitteln.

11. Satellit (500), aufweisend:
eine Sendeeinheit (300) zum Senden von optischen Signalen;
eine Empfangseinheit (320) zum Empfangen von optischen Signalen;
eine Satellitentestsignalreflexionsvorrichtung (100) nach einem der Ansprüche 1 bis 8,
wobei die Satellitentestsignalreflexionsvorrichtung ausgeführt ist, in einer Testposition ein von der Sendeeinheit ausgesandtes optisches Testsignal in Richtung der Empfangseinheit zu reflektieren, so dass die Empfangseinheit das reflektierte optische Testsignal empfängt;
wobei der Satellit ausgeführt ist, mittels dem ausgesandten optischen Testsignal und dem reflektierten optischen Testsignal eine Signalübertragungsgüte der Sendeeinheit und der Empfangseinheit zu ermitteln.

## Claims

1. Satellite test signal reflection device (100) for testing transmission devices (300) emitting optical signals (310), the satellite test signal reflection device comprising:
a plate (105), which is embodied in an at least partly transmissive manner for optical signals,
wherein the plate has a main body (110), a first surface (120) and a second surface (130) ;
wherein the first surface (120) has a remnant-reflecting coating (121);
wherein the remnant-reflecting coating is embodied to divide an optical beam (210), which passes through the plate in a first direction (205) from the first surface to the second surface, into a reflected optical beam (220) and a transmitted optical beam (230);
wherein the plate is embodied to scatter the transmitted optical beam when the latter emerges from the main body.

2. Satellite test signal reflection device according to Claim 1,
wherein the second surface (130) is embodied in a light-scattering manner.

3. Satellite test signal reflection device according to one of the preceding claims,
wherein the main body of the plate is embodied in an optically scattering manner.

4. Satellite test signal reflection device according to one of the preceding claims,
wherein the plate has an optically scattering coating (122).

5. Satellite test signal reflection device according to Claim 4,
wherein the optically scattering coating is arranged between the remnant-reflecting coating and the main body.

6. Satellite test signal reflection device according to one of the preceding claims,
wherein the remnant-reflecting coating is embodied to reflect less than 10 per mille, in particular less than 5 per mille, in particular less than 2 per mille, in particular 1 +/- 0.5 per mille of an optical power of the optical beam.

7. Satellite test signal reflection device according to one of the preceding claims, furthermore comprising:
a shield (150) with an inner area (151),
wherein the shield is arranged in such a way that the inner area is arranged opposite to the second surface of the plate;
wherein the inner area is embodied in a reflecting manner, at least in a portion thereof, such that the scattered optical beam leaving the plate is reflected back to the plate.

8. Satellite test signal reflection device according to Claim 7,
wherein the inner area of the shield is embodied in an optically scattering manner, at least in a portion thereof.

9. Transmission and reception arrangement (400) for transmitting optical signals, the transmission and reception arrangement comprising:
a transmission unit (300);
a reception unit (320);
a satellite test signal reflection device according to one of Claims 1 to 8; and
a mechanical coupling (410), which is embodied to couple the transmission unit, the reception unit and
the satellite test signal reflection device to one another mechanically;
wherein the mechanical coupling is embodied to position the satellite test signal reflection device in a test position in relation to the transmission unit and in relation to the reception unit in such a way that an optical signal emitted by the transmission unit is reflected in the direction of the reception unit by the remnant-reflecting coating.

10. Transmission and reception arrangement according to Claim 9,
wherein the transmission unit is embodied to emit an optical test signal in the test position of the satellite test signal reflection device;
wherein the reception unit is embodied to receive a test signal reflected by the plate;
wherein the transmission and reception arrangement is embodied to establish a signal transmission quality on the basis of the emitted and received test signal.

11. Satellite (500), comprising:
a transmission unit (300) for transmitting optical signals;
a reception unit (320) for receiving optical signals;
a satellite test signal reflection device (100) according to one of Claims 1 to 8,
wherein the satellite test signal reflection device is embodied to reflect, in a test position, an optical test signal emitted by the transmission unit in the direction of the reception unit such that the reception unit receives the reflected optical test signal;
wherein the satellite is embodied to establish a signal transmission quality of the transmission unit and the reception unit by means of the emitted optical test signal and the reflected optical test signal.

## Revendications

1. Dispositif de réflexion de signal de test de satellite (100) destiné à tester des dispositifs d'émission (300) émettant des signaux optiques (310), le dispositif de réflexion de signal de test de satellite comprenant :
une plaque (105) qui est configurée de manière à être au moins partiellement transparente à des signaux optiques ;
dans lequel la plaque comprend un corps de base (110), une première surface (120) et une seconde surface (130) ;
dans lequel la première surface (120) comprend un revêtement réfléchissant résiduel (121) ;
dans lequel le revêtement réfléchissent résiduel est configuré pour diviser un faisceau optique (210), qui pénètre dans la plaque dans une première direction (205) de la première surface vers la seconde surface, en un faisceau optique réfléchi (220) et un faisceau optique transmis (230) ;
dans lequel la plaque est configurée pour diffuser le faisceau optique transmis lorsque le faisceau optique transmis émane du corps de base.

2. Dispositif de réflexion de signal de test de satellite selon la revendication 1, dans lequel la seconde surface (130) est configurée pour diffuser la lumière.

3. Dispositif de réflexion de signal de test de satellite selon l'une quelconque des revendications précédentes, dans lequel le corps de base de la plaque est configuré pour être optiquement diffusant.

4. Dispositif de réflexion de signal de test de satellite selon l'une quelconque des revendications précédentes,
dans lequel la plaque présente un revêtement optiquement diffusant (122).

5. Dispositif de réflexion de signal de test de satellite selon la revendication 4,
dans lequel le revêtement optiquement diffusant est disposé entre le revêtement réfléchissant résiduel et le corps de base.

6. Dispositif de réflexion de signal de test de satellite selon l'une quelconque des revendications précédentes,
dans lequel le revêtement réfléchissant résiduel est configuré pour réfléchir moins de 10 pour mille, et plus précisément, moins de 5 pour mille, notamment moins de 2 pour mille, et plus particulièrement, 1 +/-0,5 pour mille d'une puissance optique du faisceau optique.

7. Dispositif de réflexion de signal de test de satellite selon l'une quelconque des revendications précédentes, comprenant en outre :
un écran (150) ayant une surface interne (151),
dans lequel l'écran est disposé de manière à ce que la surface interne soit disposée en face de la seconde surface de la plaque ;
dans lequel la surface interne est configurée de manière à être réfléchissante dans une région partielle afin que le faisceau optique diffusé émanant de la plaque soit rétro-réfléchi vers la plaque.

8. Dispositif de réflexion de signal de test de satellite selon la revendication 7,
dans lequel la surface interne de l'écran est configurée de manière à être optiquement diffusante dans au moins une région partielle.

9. Système d'émission et de réception (400) destiné à la transmission de signaux optiques, le système d'émission et de réception comprenant :
une unité d'émission (300) ;
une unité de réception (320) ;
un dispositif de réflexion de signal de test de satellite selon l'une quelconque des revendications 1 à 8 ; et
un couplage mécanique (410) qui est configuré pour coupler mécaniquement les uns aux autres l'unité d'émission, l'unité de réception et le dispositif de réflexion de signal de test de satellite ;
dans lequel le couplage mécanique est configuré pour positionner le dispositif de réflexion de signal de test de satellite par rapport à l'unité d'émission et à l'unité de réception à la position de test de manière à ce qu'un signal optique émis par l'unité d'émission soit réfléchi dans la direction de l'unité de réception par le revêtement réfléchissant résiduel.

10. Système d'émission et de réception selon la revendication 9,
dans lequel l'unité d'émission est configurée pour émettre un signal de test optique à la position de test du dispositif de réflexion de signal de test de satellite ;
dans lequel l'unité de réception est configurée pour recevoir un signal de test réfléchi par la plaque ; dans lequel le système d'émission et de réception est configuré pour déterminer une qualité de transmission de signal sur la base du signal de test émis et reçu.

11. Satellite (500), comprenant :
une unité d'émission (300) destinée à émettre des signaux optiques ;
une unité de réception (320) destinée à recevoir des signaux optiques ;
un dispositif de réflexion de signal de test de satellite (100) selon l'une quelconque des revendications 1 à 8,
dans lequel le dispositif de réflexion de signal de test de satellite est configuré pour réfléchir un signal de test optique émis par l'unité d'émission à une position de test dans la direction de l'unité de réception, de manière à ce que l'unité de réception reçoive le signal de test optique réfléchi ;
dans lequel le satellite est configuré pour déterminer, au moyen du signal de test optique émis et du signal de test optique réfléchi, une qualité de transmission de signal de l'unité d'émission et de l'unité de réception.
